# EUROPEAN PATENT APPLICATION

(11) **EP 4 141 749 A1**
(43) Date of publication of application: **01.03.2023**
(21) Application number: 20932224.7
(22) Date of filing: 20.04.2020
(51) Int. Cl.: G06N 5/00, G06N 20/00

(54) **ADJUSTMENT PROGRAM, ADJUSTMENT METHOD, AND INFORMATION PROCESSING DEVICE**

(71) Applicant: FUJITSU LIMITED, Kawasaki-shi, Kanagawa 211-8588 (JP)
(72) Inventor: ASAI, Tatsuya, Kawasaki-shi, Kanagawa 211-8588 (JP)
(74) Representative: Hoffmann Eitle
(86) International application number: PCT/JP2020/017116
(87) International publication number: WO 2021/214845

(57) **Abstract**

An information processing apparatus compares first pattern information in which a condition section, which is one attribute value or a combination of a plurality of attribute values, is associated with a label corresponding to the condition section with second pattern information that differs from the first pattern information. Then, if there is a discrepancy in either the condition section or the label, the information processing apparatus adjusts an importance level for the first pattern information on the basis of a degree of conformity or a degree of discrepancy between the first pattern information and the second pattern information.

## Description

### FIELD

The present invention relates to an adjustment program, an adjustment method, and an information processing apparatus.

### BACKGROUND

Conventionally, machine learning such as deep learning using training data has been executed to analyze data using a model generated by the machine learning. According to such machine learning, accuracy of the model may not be high under conditions that a training data amount is small, the training data is biased, a ground truth data amount is small, or the like.

In recent years, there has been known artificial intelligence (AI) technology capable of carrying out highly accurate training even under the conditions described above that the ground truth data amount is small or the like. For example, combination patterns of all data items included in data are set as hypotheses (also referred to as rules or patterns), an importance level of a hypothesis is calculated with a hit rate of a label for each of the hypotheses, and an important hypothesis with the importance level equal to or higher than a certain value is specified. Then, a model is generated on the basis of a plurality of important hypotheses and labels, and the generated model is used to classify and analyze data.

### CITATION LIST

### PATENT DOCUMENT

Patent Document 1: Japanese Laid-open Patent Publication No. 07-295820

### SUMMARY

### [TECHNICAL PROBLEM]

Meanwhile, in order to improve the model accuracy, it is conceivable to apply a human knowledge model to the hypotheses output by the machine learning, and to adopt the hypothesis including something matched. For example, training of a model for predicting the onset of a disease using, as data items, attribute values such as a blood glucose level, presence/absence of swelling, and hypertension will be considered. At this time, a doctor knowledge model is applied to a small amount of hypotheses output by the machine learning, and when there is a matching data item, the hypothesis is adopted.

However, since the hypotheses output by the machine learning are limited, it is highly likely that other possibilities are overlooked, and there are many hypotheses not adopted due to low probability of matching with the doctor knowledge model, whereby the output of the machine learning may not be effectively utilized.

In one aspect, an object is to provide an adjustment program, an adjustment method, and an information processing apparatus capable of generating a highly accurate model.

### [SOLUTION TO PROBLEM]

In a first proposal, an adjustment program causes a computer to execute a process of comparing first pattern information in which a condition section, which is one attribute value or a combination of a plurality of attribute values, is associated with a label corresponding to the condition section with second pattern information that differs from the first pattern information. In a case where there is a discrepancy in either the condition section or the label, the adjustment program causes the computer to execute a process of adjusting an importance level for the first pattern information on the basis of a degree of conformity or a degree of discrepancy between the first pattern information and the second pattern information.

According to an aspect of the embodiments, an adjustment program that causes a computer to execute a process, the process includes comparing first pattern information in which a condition section, which is one attribute value or a combination of a plurality of attribute values, is associated with a label that corresponds to the condition section with second pattern information that differs from the first pattern information; and adjusting, in a case where there is a discrepancy in either the condition section or the label, an importance level for the first pattern information on the basis of a degree of conformity or a degree of discrepancy between the first pattern information and the second pattern information.

### [ADVANTAGEOUS EFFECTS OF INVENTION]

According to an embodiment, a highly accurate model may be generated.

### BRIEF DESCRIPTION OF DRAWINGS

FIG. 1 is a diagram for explaining an information processing apparatus according to a first embodiment;
FIG. 2 is a diagram for explaining a training method;
FIG. 3 is a diagram for explaining the training method;
FIG. 4 is a diagram for explaining a problematic point that a hypothesis may not be effectively utilized;
FIG. 5 is a functional block diagram illustrating a functional configuration of the information processing apparatus according to the first embodiment;
FIG. 6 is a diagram for explaining an exemplary hypothesis set;
FIG. 7 is a diagram for explaining an exemplary knowledge model;
FIG. 8 is a diagram for explaining discrepancy determination;
FIG. 9 is a diagram for explaining exemplary discrepancy in condition sections;
FIG. 10 is a diagram for explaining exemplary discrepancy in the condition sections;
FIG. 11 is a diagram for explaining exemplary discrepancy in conclusion sections;
FIG. 12 is a diagram for explaining exemplary discrepancy in the conclusion sections;
FIG. 13 is a diagram for explaining exemplary discrepancy in the condition sections and the conclusion sections;
FIG. 14 is a diagram for explaining the discrepancy determination and a calculation result of a collation rate;
FIG. 15 is a diagram for explaining correction of an importance level;
FIG. 16 is a flowchart illustrating a processing flow according to the first embodiment;
FIG. 17 is a diagram for explaining a comparative example of hypotheses and an expert knowledge model;
FIG. 18 is a diagram for explaining a comparative example of the hypotheses and the expert knowledge model; and
FIG. 19 is a diagram for explaining an exemplary hardware configuration.

### DESCRIPTION OF EMBODIMENTS

Hereinafter, embodiments of an adjustment program, an adjustment method, and an information processing apparatus according to the present invention will be described in detail with reference to the drawings. Note that the present invention is not limited by those embodiments. Furthermore, the individual embodiments may be appropriately combined within a range without inconsistency.

### [First Embodiment]

### [Description of Information Processing Apparatus]

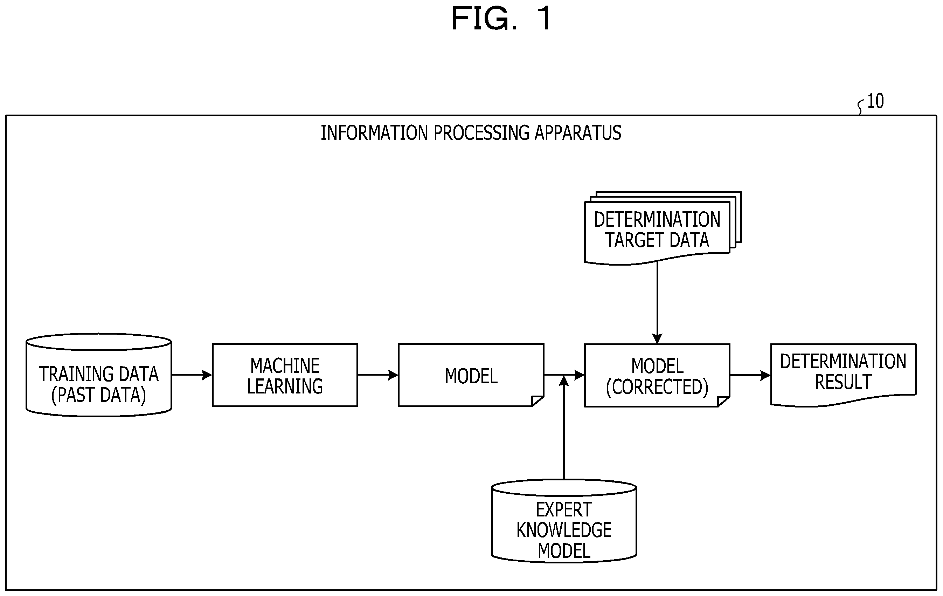

FIG. 1 is a diagram for explaining an information processing apparatus 10 according to a first embodiment. The information processing apparatus 10 illustrated in FIG. 1 carries out machine learning using training data to generate a model, and corrects the trained model using an expert knowledge model. Thereafter, the information processing apparatus 10 performs determination on determination target data using the corrected model, and outputs a determination result.

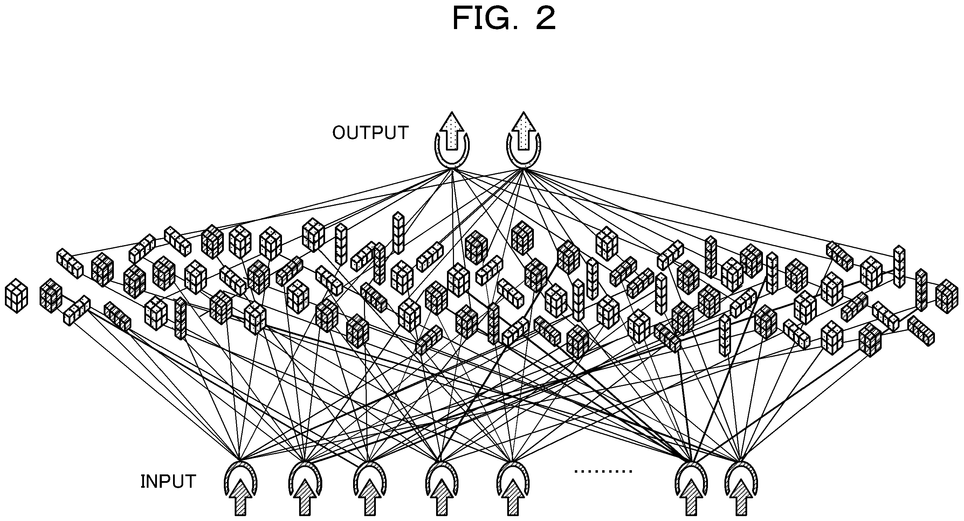

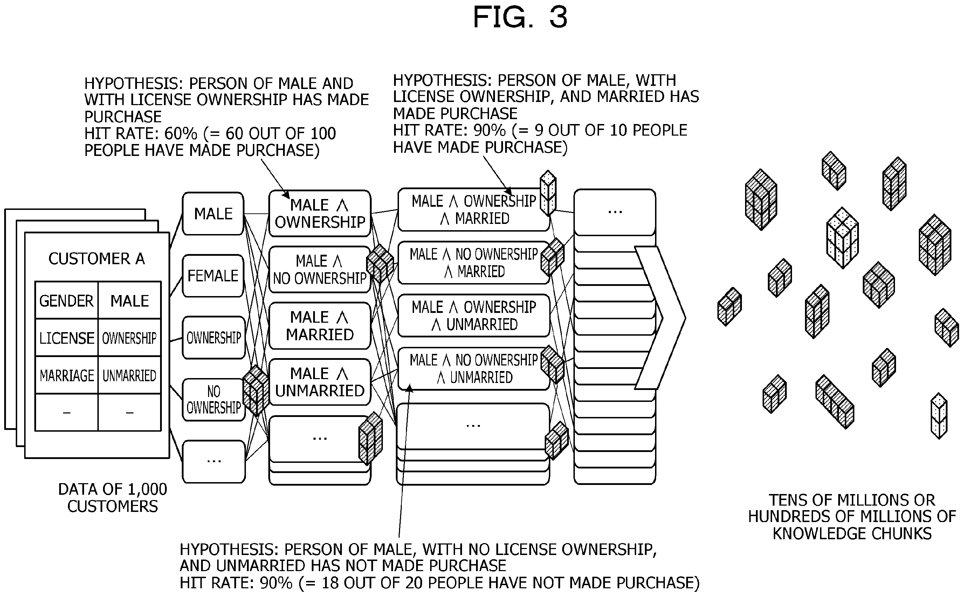

Here, a training method of the machine learning executed by the information processing apparatus 10 will be described. FIGs. 2 and 3 are diagrams for explaining the training method. The information processing apparatus 10 generates a model in which a hypothesis and an importance level are combined by training. In general, deep learning achieves accuracy improvement by stacking multiple layers of neural networks imitating the structure of the neural circuit of the human brain and refining one model, and thus it is a complex model that may not be understood by humans. Meanwhile, as illustrated in FIG. 2, the information processing apparatus 10 combines data items, which are exemplary attribute values, to extract a large number of hypotheses, and adjusts importance levels of the hypotheses (knowledge chunks (may be simply referred to as "chunks" hereinafter)) to carry out machine learning (e.g., wide learning) for constructing a highly accurate classification model. The knowledge chunk is a simple model that may be understood by humans, and is a model that describes a hypothesis that may be established as an input/output relationship in a logical expression.

Specifically, the information processing apparatus 10 sets combination patterns of all data items of input data as hypotheses (chunks), and determines the importance level of a hypothesis on the basis of a hit rate of a label for each of the hypotheses. Then, the information processing apparatus 10 constructs a model on the basis of the labels (objective variables) and the plurality of knowledge chunks having been extracted. At this time, the information processing apparatus 10 takes control in such a manner that the importance level is lowered in a case where the items included in the knowledge chunk contain many overlaps with items of another knowledge chunk.

A specific example will be described with reference to FIG. 3. Here, an example of determining a customer who purchases a certain product or service will be considered. Customer data includes various items (attribute values) such as "gender", "presence/absence of license", "marriage", "age", and "annual income". All combinations of those items are set as hypotheses, and the importance level of each of the hypotheses is considered. For example, there are 10 customers who fit the hypothesis in which the items "male", "ownership", and "married" are combined in the data. If 9 out of those 10 people have purchased the product or the like, a hypothesis "a person of "male", "ownership", and "married" makes a purchase" with a high hit rate is set, and this is extracted as a knowledge chunk. Note that a label, which is an objective variable, is set to be binary representation of whether or not the product has been purchased here as an example.

Meanwhile, there are 100 customers who fit the hypothesis in which the items "male" and "ownership" are combined in the data. if only 60 out of those 100 people have purchased the product or the like, the hit rate of purchasing is 60%, which is lower than a threshold value (e.g., 80), and thus a hypothesis "a person of "male" and "ownership" makes a purchase" with a low hit rate is set, and this is not extracted as a knowledge chunk.

Furthermore, there are 20 customers who fit the hypothesis in which the items "male", "no ownership", and "unmarried" are combined in the data. If 18 out of those 20 people have not purchased the product or the like, the hit rate of non-purchasing is 90%, which is equal to or higher than a threshold value (e.g., 80), and thus a hypothesis "a person of "male", "no ownership", and "unmarried" does not make a purchase" with a high hit rate is set, and this is extracted as a knowledge chunk.

In this manner, the information processing apparatus 10 extracts tens of millions or hundreds of millions of knowledge chunks that support purchasing and knowledge chunks that support non-purchasing, and carries out model training. The model trained in this manner enumerates combinations of features as hypotheses (chunks), an importance level, which is exemplary likelihood indicating certainty, is added to each of the hypotheses, the sum of the importance levels of the hypotheses that appear in input data is set as a score, and when the score is equal to or higher than a threshold value, it is output as a positive example.

In other words, the score is an index indicating the certainty of the state, and is the total value of the importance levels of the chunks in which all features belonging thereto are satisfied among the chunks (hypotheses) generated by individual models. For example, it is assumed that a chunk A is associated with "importance level: 20, features (A1, A2)", a chunk B is associated with "importance level: 5, feature (B1)", a chunk C is associated with "importance level: 10, features (C1, C2)", and the data items of the determination target data includes (A1, A2, B1, and C1). At this time, all the features of the chunk A and chunk B appear, and the score is "20 + 5 = 25", accordingly. Furthermore, the features here correspond to a user action and the like.

While the machine learning described above may comprehensively enumerate the hypotheses, experts such as doctors and counselors may have knowledge (knowledge model) used as a criterion for judgment based on their own experience. In such a case, it is considered that the knowledge model is applied to the hypotheses to adopt a matching hypothesis. In this case, the generated hypotheses are limited so that other possibilities may be overlooked, whereby the hypotheses obtained by the machine learning may not be utilized such as hypotheses not adopted due to low probability of matching with the expert knowledge model are generated.

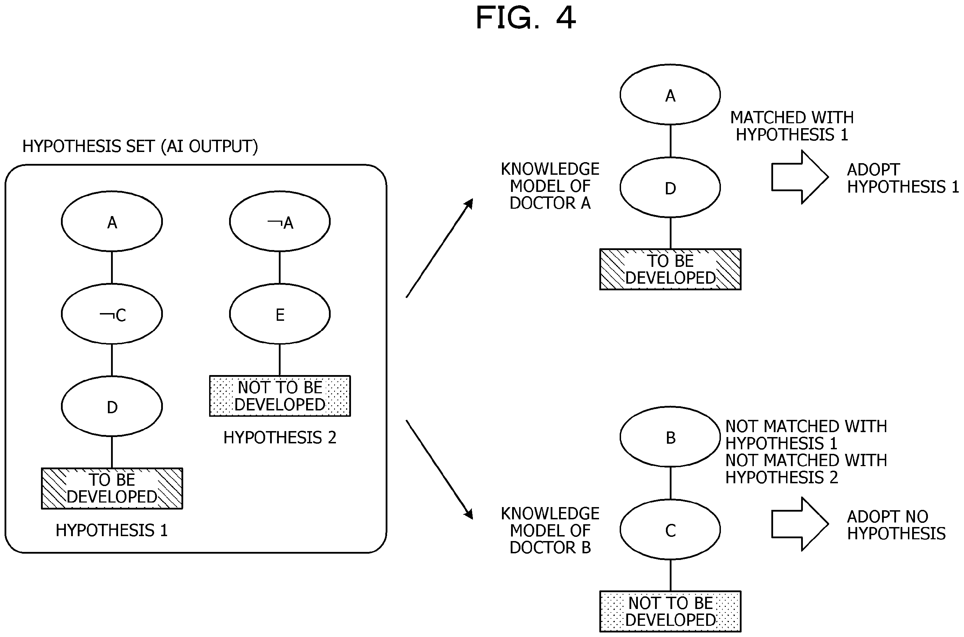

FIG. 4 is a diagram for explaining a problematic point that a hypothesis may not be effectively utilized. Here, an example will be described using healthcare. As illustrated in FIG. 4, it is assumed that a first hypothesis and a second hypothesis are generated as a hypothesis set. The first hypothesis is a hypothesis that draws a conclusion of "to be developed" when a condition section is "A, not C, and D", and the second hypothesis is a hypothesis that draws a conclusion of "not to be developed" when the condition section is "not A, and E". Furthermore, it is assumed that there is a knowledge that the conclusion "to be developed" is drawn when the condition section is "A and D" as a knowledge model of a doctor A, and that there is a knowledge that the conclusion "not to be developed" is drawn when the condition section is "B and C" as a model of a doctor B. Note that A and the like indicate attribute values such as presence/absence of fever, physical conditions such as a body temperature of 38 degrees or higher, medical examination results, and the like.

In such a situation, a case of adopting a hypothesis that matches the doctor knowledge model as a trained model will be considered. For example, when each hypothesis is collated with each doctor knowledge model, the first hypothesis is adopted as it partially includes the conditions of the knowledge model of the doctor A, while the second hypothesis is not adopted as it does not include any knowledge model. In this manner, it may not be possible to utilize the hypotheses obtained by the machine learning.

Meanwhile, since the importance level is assigned to each of the hypotheses obtained by the machine learning described with reference to FIGs. 2 and 3, it is also possible to prioritize the adoption according to the importance level. However, validity of the importance levels of the hypotheses generated by the machine learning may be problematic.

In view of the above, it is considered that the information processing apparatus 10 according to the first embodiment reflects the knowledge of the experts in the hypotheses. Specifically, the information processing apparatus 10 calculates a collation rate and presence/absence of discrepancy by collating the expert knowledge model with each hypothesis, and corrects the importance level of the hypothesis depending on the value of the collation rate for the hypothesis inconsistent with the knowledge model. With this arrangement, it becomes possible to generate a highly accurate model that reflects the expert knowledge model.

### [Functional Configuration]

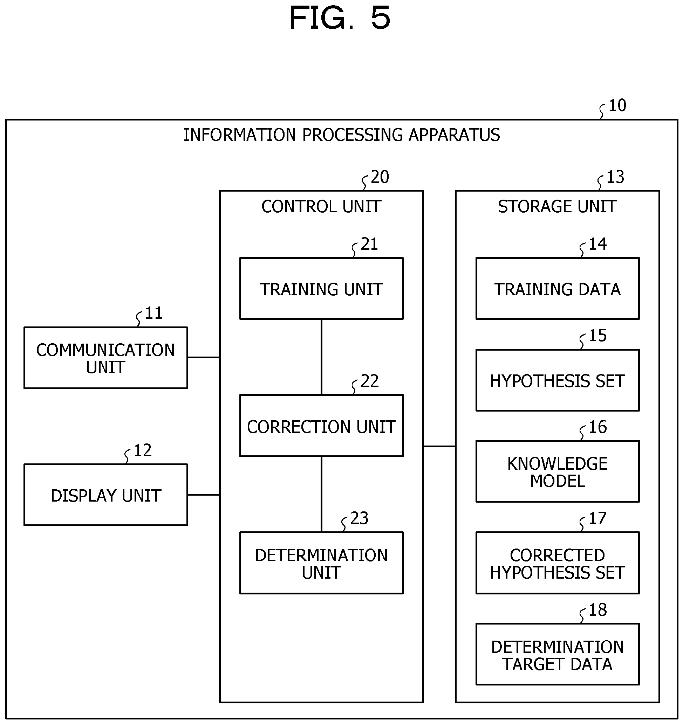

FIG. 5 is a functional block diagram illustrating a functional configuration of the information processing apparatus 10 according to the first embodiment. As illustrated in FIG. 5, the information processing apparatus 10 includes a communication unit 11, a display unit 12, a storage unit 13, and a control unit 20.

The communication unit 11 is a processing unit that controls communication with another device, and is implemented by, for example, a communication interface. For example, the communication unit 11 carries out transmission/reception of various data including a processing start instruction and the like with an administrator terminal and the like.

The display unit 12 is a processing unit that displays various types of information, and is implemented by, for example, a display, a touch panel, or the like. For example, the display unit 12 displays a training result, a correction result, a determination result, and the like.

The storage unit 13 is a processing unit that stores various types of data, programs to be executed by the control unit 20, and the like, and is implemented by, for example, a memory or a hard disk. The storage unit 13 stores training data 14, a hypothesis set 15, a knowledge model 16, a corrected hypothesis set 17, and determination target data 18.

The training data 14 is training data to be used for the machine learning. Specifically, the training data 14 is supervised training data in which a plurality of items, which are examples of attribute values corresponding to explanatory variables, and labels (ground truth information) corresponding to objective variables are associated with each other. For example, taking healthcare as an example, the training data 14 includes data in which items "male, 30s, and with fever" and a label "onset of a disease A" are associated with each other, data in which items "female, with fever, without palpitations, and hypotension" and a label "no onset of the disease A" are associated with each other, and the like.

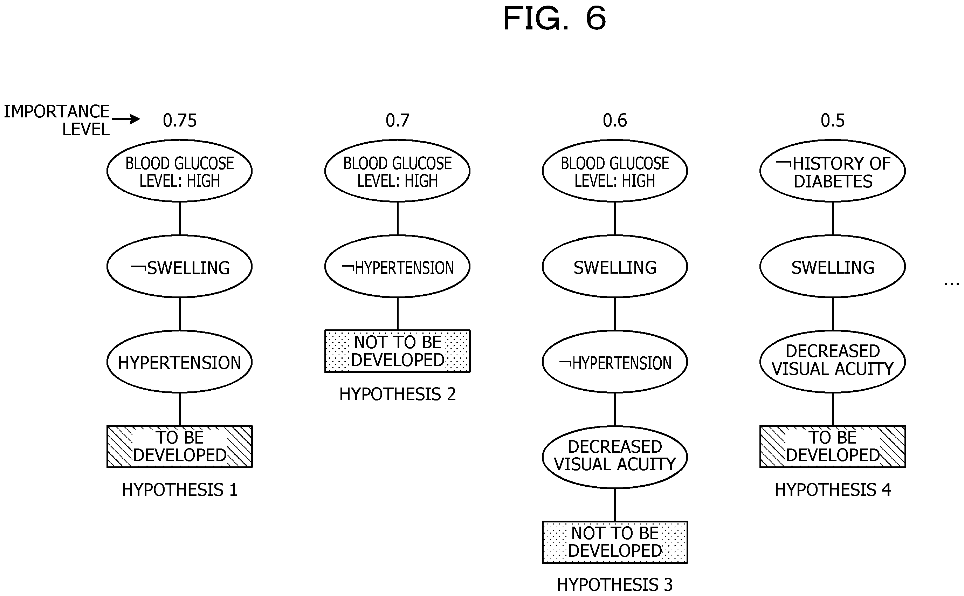

The hypothesis set 15 is a set of hypotheses generated by the machine learning, and is, for example, a set of the knowledge chunks described above. FIG. 6 is a diagram for explaining an exemplary hypothesis set. As illustrated in FIG. 6, the hypothesis set 15 includes hypotheses such as the first hypothesis to fourth hypothesis. Here, the hypothesis is information in which the condition section, which is a combination of one or a plurality of attribute values, and the label (conclusion) corresponding to the condition section are associated with each other.

For example, in the first hypothesis, the condition section "blood glucose level: high, no swelling, and hypertension" and the conclusion section °to be developed" are associated with each other, and the importance level "0.75" is set. In the second hypothesis, the condition section "blood glucose level: high, and without hypertension" and the conclusion section "not to be developed" are associated with each other, and the importance level "0.7" is set.

In the third hypothesis, the condition section "blood glucose level: high, swelling, without hypertension, and decreased visual acuity" and the conclusion section "not to be developed" are associated with each other, and the importance level "0.6" is set. In the fourth hypothesis, the condition section "no history of diabetes, swelling, and decreased visual acuity" and the conclusion section "to be developed" are associated with each other, and the importance level "0.5" is set.

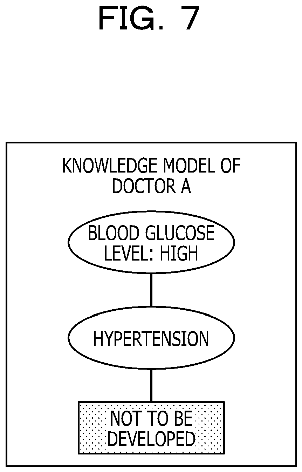

The knowledge model 16 is information that models the knowledge obtained by doctors as an empirical rule. FIG. 7 is a diagram for explaining an example of the knowledge model 16. As illustrated in FIG. 7, in the knowledge model of the doctor A, the conclusion "not to be developed" is associated to the case with the condition section "blood glucose level: high, and hypertension". Note that the knowledge model 16 may be manually generated by each doctor, or may be generated by an administrator or the like by collecting information from each doctor.

The corrected hypothesis set 17 is a set of hypotheses corrected by the control unit 20 to be described later. For example, the corrected hypothesis set 17 is information obtained by correcting the importance level of each hypothesis of the hypothesis set 15. Note that the details will be described later.

The determination target data 18 is target data to be determined using the trained and corrected model. For example, the determination target data 18 is data of a patient who has come to a hospital for medical examination, and is data with items of measurement results, such as a body temperature, blood pressure, symptom, and blood glucose level, a medical history, and the like.

The control unit 20 is a processing unit that takes overall control of the information processing apparatus 10, and is implemented by, for example, a processor or the like. The control unit 20 includes a training unit 21, a correction unit 22, and a determination unit 23. Note that the training unit 21, the correction unit 22, and the determination unit 23 may be implemented as an exemplary electronic circuit included in the processor, or may be implemented as an exemplary process to be executed by the processor.

The training unit 21 is a processing unit that carries out the machine learning using the training data 14. For example, the training unit 21 carries out the machine learning using the training methods described with reference to FIGs. 2 and 3 to generate a plurality of hypotheses, and stores them in the storage unit 13 as the hypothesis set 15.

The correction unit 22 is a processing unit that corrects the importance level of each hypothesis obtained by the machine learning by the training unit 21 using the expert knowledge model. Specifically, the correction unit 22 calculates a collation rate and presence/absence of discrepancy by collating the expert knowledge model with each hypothesis, and corrects the importance level of the hypothesis depending on the value of the collation rate for the hypothesis inconsistent with the knowledge model. Then, the correction unit 22 stores each hypothesis with the corrected importance level in the storage unit 13 as the corrected hypothesis set 17.

### (Exemplary Discrepancy Determination)

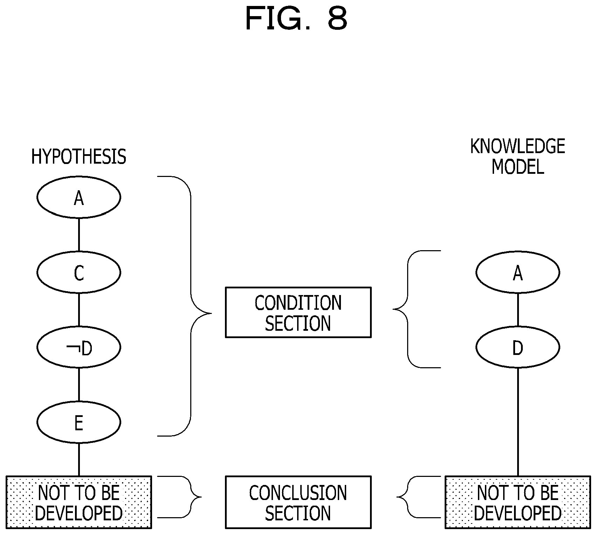

Here, discrepancy determination executed by the correction unit 22 will be described. FIG. 8 is a diagram for explaining the discrepancy determination. As illustrated in FIG. 8, in both of the hypothesis and the knowledge model, the condition section, which is a combination of one or a plurality of attribute values (items), and the conclusion section corresponding to the label are associated with each other. The correction unit 22 compares those condition sections and conclusion sections with respect to the hypothesis and the knowledge model, and adjusts the importance level of the hypothesis according to a degree of conformity or a degree of discrepancy.

### (Exemplary Discrepancy in Condition Section)

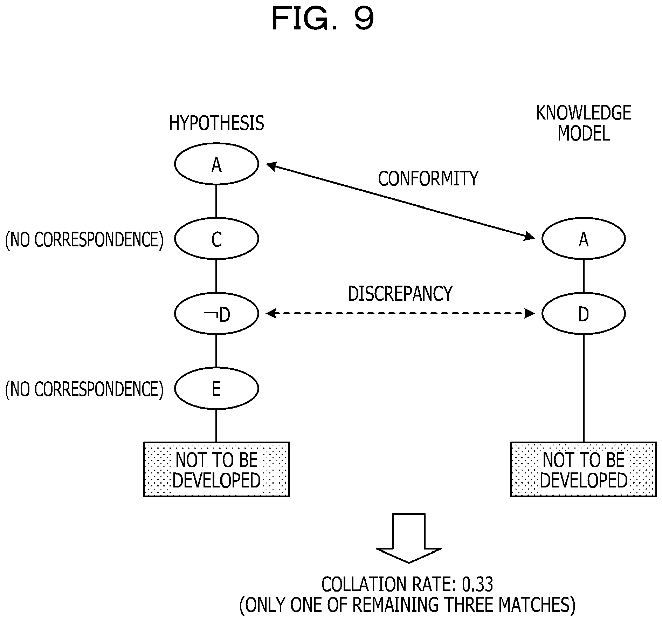

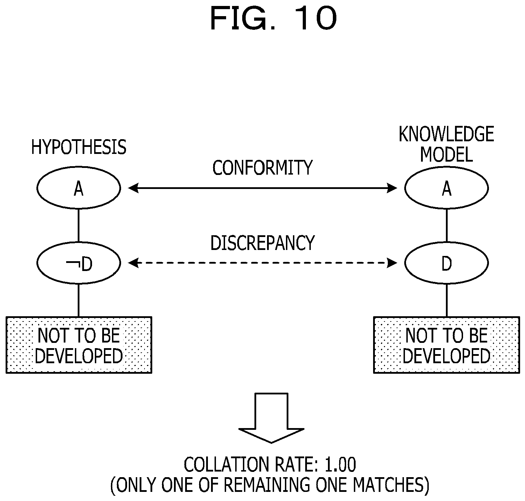

First, exemplary discrepancy in the condition sections will be described. FIGs. 9 and 10 are diagrams illustrating the exemplary discrepancy in the condition sections. In a case where the conclusion sections (labels) match but the condition sections (logical expressions) are partially inconsistent with each other, the correction unit 22 changes a degree of reduction in the importance level of the hypothesis according to the collation rate.

As illustrated in FIG. 9, the correction unit 22 compares the attribute values "A", "C", "not D", and "E" included in the condition section of the hypothesis whose conclusion section "not to be developed" matches the knowledge model with the condition section "A" and "D" included in the knowledge model, and specifies that "not D" in the condition section of the hypothesis is inconsistent. Then, of the three "A", "C", and "E" other than the inconsistent attribute value "not D", only one "A" matches the knowledge model, and thus the correction unit 22 calculates the collation rate as "1/3 = 0.33".

Furthermore, as illustrated in FIG. 10, the correction unit 22 compares the attribute values "A" and "not D" included in the condition section of the hypothesis whose conclusion section "not to be developed" matches the knowledge model with the condition section "A" and "D" included in the knowledge model, and specifies that "not D" in the condition section of the hypothesis is inconsistent. Then, since "A" other than the inconsistent attribute value "not D" matches the knowledge model, the correction unit 22 calculates the collation rate as "1/1 = 1.00".

### (Exemplary Discrepancy in Conclusion Section)

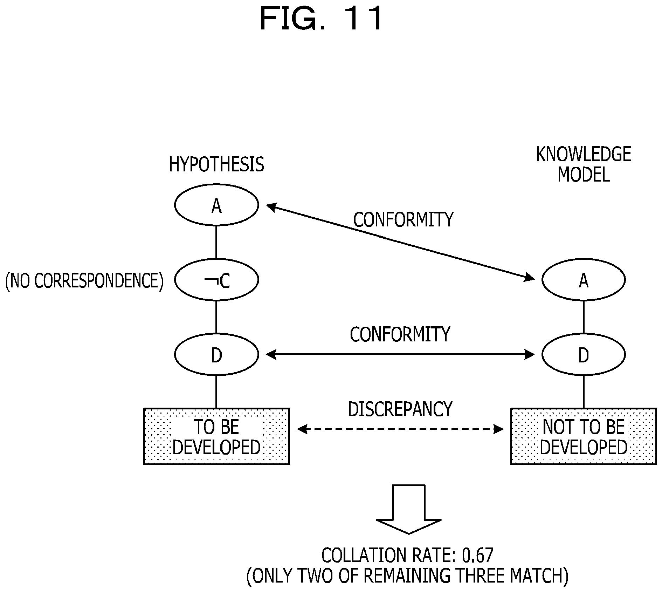

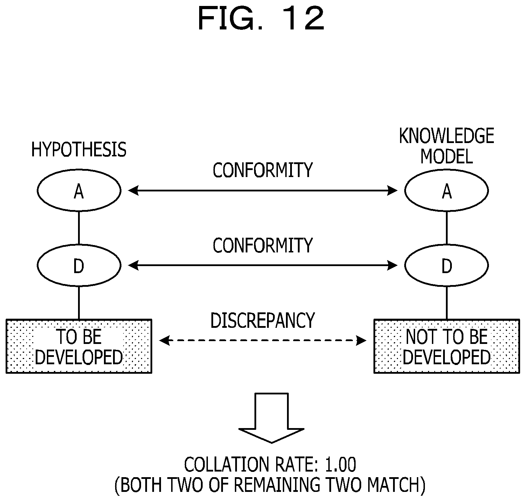

Next, exemplary discrepancy in the conclusion sections will be described. FIGs. 11 and 12 are diagrams illustrating the exemplary discrepancy in the conclusion sections. In a case where the conclusion sections (labels) are inconsistent with each other while the condition sections (logical expressions) are not inconsistent, the correction unit 22 changes the degree of reduction in the importance level of the hypothesis according to the collation rate.

As illustrated in FIG. 11, the correction unit 22 compares the attribute values "A", "not C", and "D" included in the condition section of the hypothesis with the conclusion section inconsistent with the knowledge model with the condition section "A" and "D" included in the knowledge model, and specifies that "A" and "D" match. Then, since two of the three attribute values of the hypothesis match the attribute values of the knowledge model, the correction unit 22 calculates the collation rate as "2/3 = 0.67".

Furthermore, as illustrated in FIG. 12, the correction unit 22 compares the attribute values "A" and "D" included in the condition section of the hypothesis with the conclusion section inconsistent with the knowledge model with the condition section "A" and "D" included in the knowledge model, and specifies that "A" and "D" match. Then, since both of the two attribute values of the hypothesis match the attribute values of the knowledge model, the correction unit 22 calculates the collation rate as "2/2 = 1.00".

### (Discrepancy in Both of Condition Section and Conclusion Section)

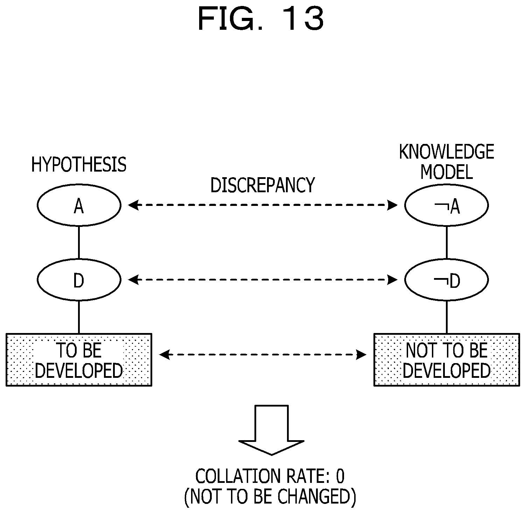

Note that, in a case where both the condition sections and the conclusion sections are inconsistent, the correction unit 22 considers there is "no relationship", and does not correct the importance level. FIG. 13 is a diagram for explaining exemplary discrepancy in the condition sections and the conclusion sections. As illustrated in FIG. 13, the hypothesis with the condition section "A" and "D" and the conclusion section °to be developed" is all inconsistent with the knowledge model with the condition section "not A" and "not D" and the conclusion section "not to be developed". In this case, the correction unit 22 determines that the hypothesis is not affected by the knowledge model, and determines it not to be corrected.

### (Exemplary Correction)

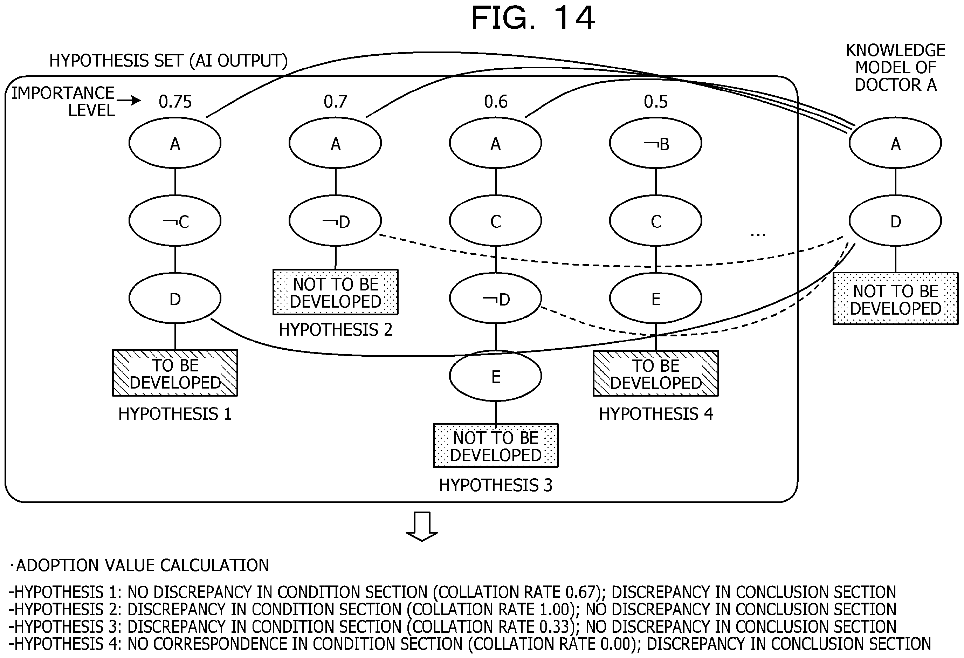

Next, an example of correcting the importance level of each hypothesis according to the collation rate described will be described. FIG. 14 is a diagram for explaining the discrepancy determination and a calculation result of the collation rate. As illustrated in FIG. 14, the correction unit 22 calculates a concordance rate between each hypothesis and the knowledge model of the doctor A by the method described above.

Specifically, the first hypothesis with the importance level "0.75" has no discrepancy in the condition section and has discrepancy in the conclusion section, and two of the three attribute values in the condition section match the attribute values of the knowledge model, and thus the correction unit 22 calculates the collation rate as "2/3 = 0.67". Similarly, the second hypothesis with the importance level "0.7" has discrepancy in the condition section and has no discrepancy in the conclusion section, and the remaining one attribute value not inconsistent in the condition section matches the attribute value of the knowledge model, and thus the correction unit 22 calculates the collation rate as "1/1 = 1.00".

Furthermore, the third hypothesis with the importance level "0.6" has discrepancy in the condition section and has no discrepancy in the conclusion section, and one of the remaining three attribute values not inconsistent in the condition section matches the attribute value of the knowledge model, and thus the correction unit 22 calculates the collation rate as "1/3 = 0.33". Similarly, the fourth hypothesis with the importance level "0.5" has no discrepancy in the condition section and has discrepancy in the conclusion section, and all of the three attribute values in the condition section do not match the attribute values of the knowledge model, and thus the correction unit 22 calculates the collation rate as "0/3 = 0".

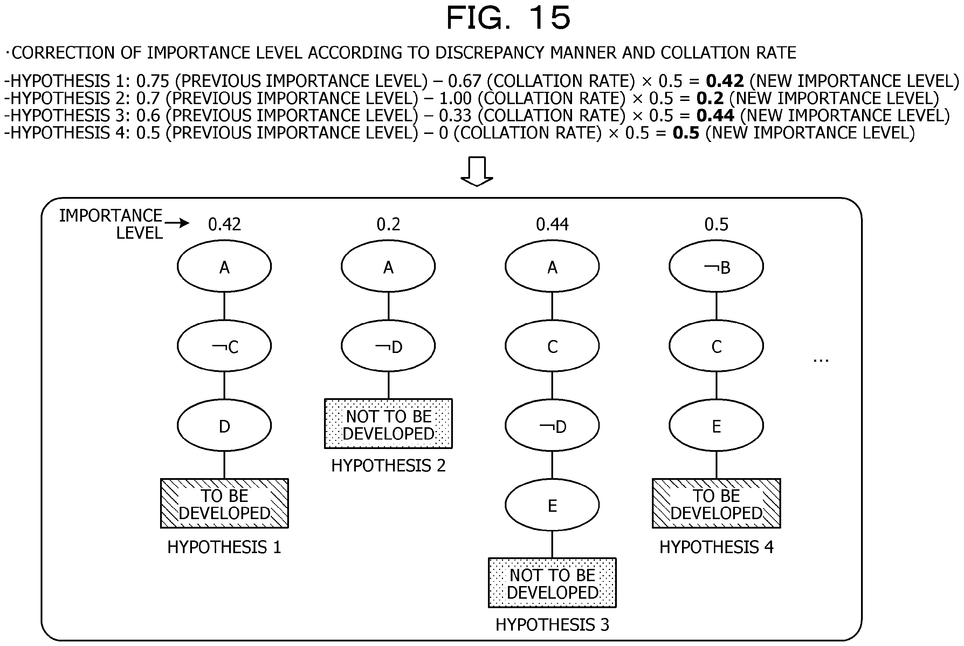

Thereafter, the correction unit 22 corrects the importance level according to the discrepancy manner and the collation rate. FIG. 15 is a diagram for explaining correction of the importance level. As illustrated in FIG. 15, the correction unit 22 calculates, for each hypothesis, "importance level before correction - (collation rate × constant) = new importance level" as a corrected value.

For example, the correction unit 22 calculates a corrected importance level °0.75 - (0.67 × 0.5) = 0.42" for the first hypothesis, and calculates a corrected importance level "0.7 - (1.00 × 0.5) = 0.2" for the second hypothesis. Similarly, the correction unit 22 calculates a corrected importance level "0.6 - (0.33 × 0.5) = 0.44" for the third hypothesis, and calculates a corrected importance level "0.5 - (0 × 0.5) = 0.5" for the fourth hypothesis. Note that the constant may be optionally set.

Returning to FIG. 5, the determination unit 23 is a processing unit that executes determination of the determination target data 18 using the trained and corrected model. For example, the determination unit 23 generates all combinations of data items from a plurality of data items (attribute values) included in the determination target data 18. Then, the determination unit 23 refers to the corrected hypothesis set 17 to specify the importance level of each combination generated from the determination target data 18, and calculates the total value. Thereafter, the determination unit 23 determines that the case is a positive example (e.g., not to be developed) when the total value of the importance levels is equal to or larger than a threshold value, and determines that the case is a negative example (e.g., to be developed) when the total value of the importance levels is less than the threshold value. Then, the determination unit 23 stores the determination result in the storage unit 13, and displays it on the display unit 12.

### [Processing Flow]

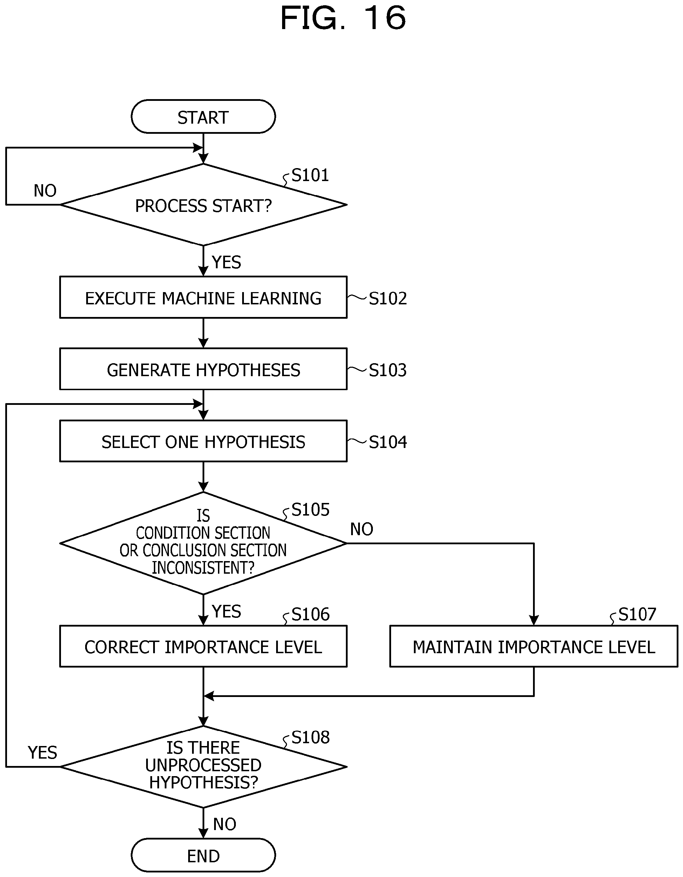

FIG. 16 is a flowchart illustrating a processing flow according to the first embodiment. As illustrated in FIG. 16, when the training unit 21 of the information processing apparatus is instructed to start a process (Yes in S101), it carries out the machine learning using the training data 14 (S102), and generates the hypothesis set 15 including a plurality of hypotheses (S103).

Subsequently, when the machine learning is complete, the correction unit 22 selects one generated hypothesis (S104), compares the selected hypothesis with the knowledge model, and determines whether the condition section or the conclusion section is inconsistent (S105).

Then, if there is discrepancy (Yes in S105), the correction unit 22 corrects the importance level according to the collation rate (S106), and if there is no discrepancy (No in S105), it maintains the importance level without making a correction (S107).

Thereafter, if there is an unprocessed hypothesis (Yes in S108), the correction unit 22 repeats S104 and subsequent steps. On the other hand, if there is no unprocessed hypothesis (No in S108), the correction unit 22 terminates the process.

### [Effects]

As described above, the information processing apparatus 10 is capable of providing an AI system that continues to operate while correcting models inappropriate from the viewpoint of the experts when operating the models by the machine learning. The information processing apparatus 10 is capable of reflecting the expert knowledge in the output of the machine learning by reducing the importance level of the hypothesis inconsistent with the expert knowledge model with respect to the comprehensively enumerated hypothesis group. Therefore, the information processing apparatus 10 is enabled to effectively utilize the output of the machine learning and to reflect the expert knowledge model, whereby a highly accurate model may be generated.

### [Second Embodiment]

Incidentally, while the embodiment of the present invention has been described above, the present invention may be carried out in a variety of different modes in addition to the embodiment described above.

### [Numerical Values, etc.]

The types, number, and the like of the threshold values, application fields, training data, data items, hypotheses, and knowledge models used in the embodiment described above are merely examples, and may be optionally changed. Furthermore, it is also possible to implement a device for generating hypotheses by machine learning and a device for correcting the generated hypotheses as separate devices.

Furthermore, in a case of using a hypothesis to which no importance level is set, it may be newly assigned according to a concordance rate or the like. Note that the hypotheses are not limited to those generated by the machine learning, but may be manually generated by an administrator according to information collected from multiple users, or may be generated using a publicly known analysis tool or the like. In this case, an appearance rate, the number of appearances, and the like may be adopted as an importance level.

### [Exemplary Hypothesis]

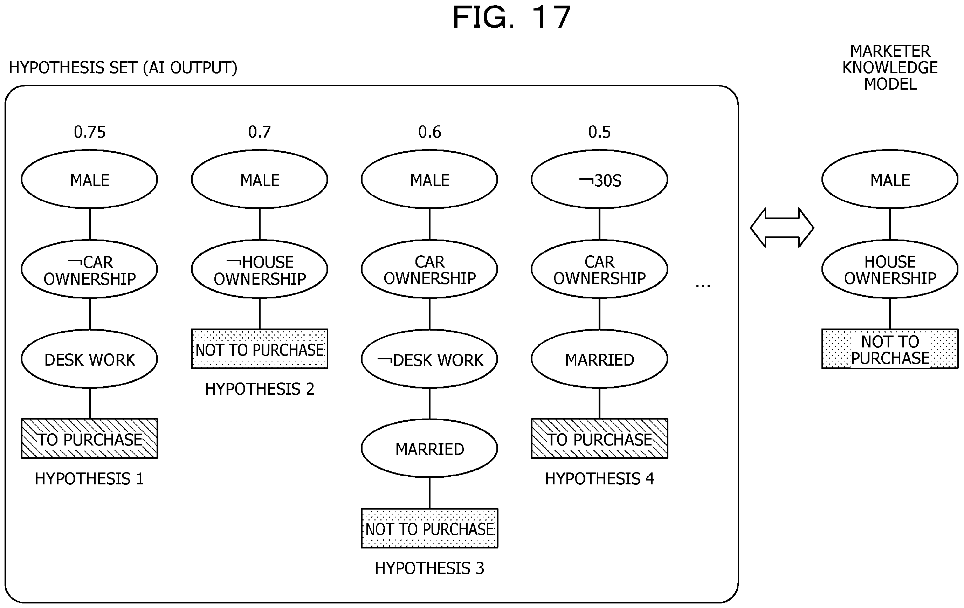

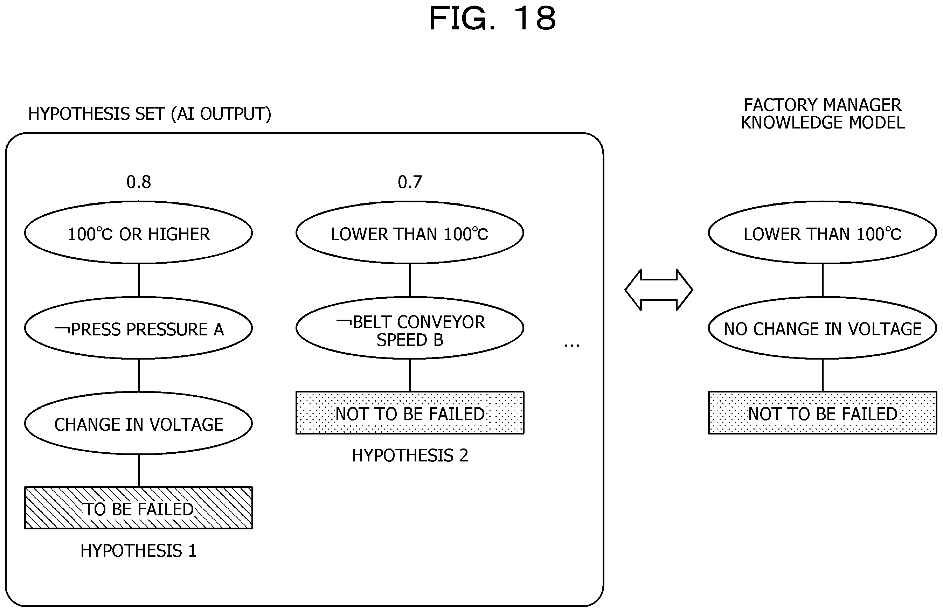

While the example described above has explained the example applied to the healthcare field, it is not limited to this, and may be applied to various fields. FIGs. 17 and 18 are diagrams for explaining a comparative example of hypotheses and an expert knowledge model.

As illustrated in FIG. 17, an information processing apparatus 10 may be applied to a digital marketing field. In this case, examples of the hypotheses include a first hypothesis (importance level = 0.75) in which a condition section "male, no car ownership, and desk work" and a conclusion section °to purchase" are associated with each other, a second hypothesis (importance level = 0.7) in which a condition section "male, and no house ownership" and a conclusion section "not to purchase" are associated with each other, and the like. Furthermore, examples of a marketer knowledge model include a model in which the condition section "male, and house ownership" and the conclusion section "not to purchase" are associated with each other.

Furthermore, as illustrated in FIG. 18, the information processing apparatus 10 may also be applied to quality and product control in a factory. In this case, examples of the hypotheses include a first hypothesis (importance level = 0.8) in which a condition section "100°C or higher, not press pressure A, and change in voltage" and a conclusion section °to be failed" are associated with each other, a second hypothesis (importance level = 0.5) in which a condition section "lower than 100°C, and not belt conveyor speed B" and a conclusion section "not to be failed" are associated with each other, and the like. Furthermore, examples of a knowledge model of a factory manager who performs quality control include a model in which the condition section "lower than 100°C, and no change in voltage" and the conclusion section "not to be failed" are associated with each other.

### [System]

Pieces of information including a processing procedure, a control procedure, a specific name, various types of data, and parameters described above or illustrated in the drawings may be optionally changed unless otherwise specified. Note that the correction unit 22 is an example of a comparison unit and an adjustment unit. Furthermore, the hypothesis is an example of first pattern information, and the knowledge model is an example of second pattern information. The data item is an example of an attribute value. The collation rate is an example of a degree of conformity or a degree of discrepancy.

Furthermore, each component of each device illustrated in the drawings is functionally conceptual, and is not necessarily physically configured as illustrated in the drawings. In other words, specific forms of distribution and integration of individual devices are not limited to those illustrated in the drawings. That is, all or a part thereof may be configured by being functionally or physically distributed or integrated in optional units according to various types of loads, usage situations, or the like.

Moreover, all or any part of the individual processing functions performed in the individual devices may be implemented by a central processing unit (CPU) and a program analyzed and executed by the CPU, or may be implemented as hardware by wired logic.

### [Hardware]

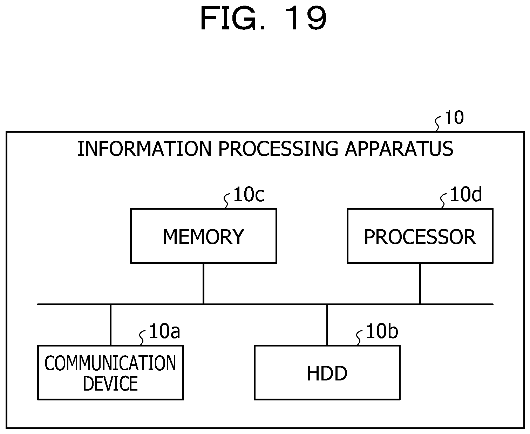

Next, an exemplary hardware configuration of the information processing apparatus 10 will be described. FIG. 19 is a diagram for explaining the exemplary hardware configuration. As illustrated in FIG. 19, the information processing apparatus 10 includes a communication device 10a, a hard disk drive (HDD) 10b, a memory 10c, and a processor 10d. Furthermore, the individual units illustrated in FIG. 19 are mutually connected by a bus or the like.

The communication device 10a is a network interface card or the like, and communicates with another server. The HDD 10b stores programs and DBs that operate the functions illustrated in FIG. 5.

The processor 10d reads, from the HDD 10b or the like, a program that executes processing similar to that of each processing unit illustrated in FIG. 5, and loads it in the memory 10c, thereby operating a process for implementing each function described with reference to FIG. 5 or the like. For example, the process implements a function similar to that of each processing unit included in the information processing apparatus 10. Specifically, the processor 10d reads, from the HDD 10b or the like, a program having a function similar to that of the training unit 21, the correction unit 22, the determination unit 23, or the like. Then, the processor 10d executes a process for performing processing similar to that of the training unit 21, the correction unit 22, the determination unit 23, or the like.

In this manner, the information processing apparatus 10 operates as an information processing apparatus that executes an information processing method by reading and executing a program. Furthermore, the information processing apparatus 10 may implement functions similar to those in the embodiments described above by reading the program described above from a recording medium with a medium reading device and executing the read program described above. Note that other programs referred to in the embodiments are not limited to being executed by the information processing apparatus 10. For example, the present invention may be similarly applied to a case where another computer or server executes a program, or a case where such computer and server cooperatively execute a program.

### REFERENCE SIGNS LIST

- 10: Information processing apparatus
- 11: Communication unit
- 12: Display unit
- 13: Storage unit
- 14: Training data
- 15: Hypothesis set
- 16: Knowledge model
- 17: Corrected hypothesis set
- 18: Determination target data
- 20: Control unit
- 21: Training unit
- 22: Correction unit
- 23: Determination unit

## Claims

1. An adjustment program that causes a computer to execute a process, the process comprising:
comparing first pattern information in which a condition section, which is one attribute value or a combination of a plurality of attribute values, is associated with a label that corresponds to the condition section with second pattern information that differs from the first pattern information; and
adjusting, in a case where there is a discrepancy in either the condition section or the label, an importance level for the first pattern information on the basis of a degree of conformity or a degree of discrepancy between the first pattern information and the second pattern information.

2. The adjustment program according to claim 1, wherein in a case where the label is inconsistent between the first pattern information and the second pattern information, the adjusting calculates a concordance rate of an attribute value in the condition section, and adjusts the importance level set in the first pattern information on the basis of the concordance rate.

3. The adjustment program according to claim 1, wherein in a case where the label matches between the first pattern information and the second pattern information and a part of the condition section is inconsistent, the adjusting calculates a concordance rate of another attribute value other than the attribute value inconsistent in the condition section, and adjusts the importance level set in the first pattern information on the basis of the concordance rate.

4. The adjustment program according to claim 1, wherein
the first pattern information includes a hypothesis generated by machine learning that uses training data with a plurality of attribute values and a label, the hypothesis with a combination of the plurality of attribute values and an importance level of the combination, and
the second pattern information includes a knowledge model that models a knowledge obtained by an empirical rule of an expert in a training field using the condition section and the label.

5. The adjustment program according to claim 4, the adjustment program causing the computer to execute the process further comprising:
determining a positive example or a negative example for determination target data with the plurality of attribute values, wherein
the comparing compares each of a plurality of the hypotheses with the knowledge model,
the adjusting adjusts the importance level for each of the plurality of hypotheses, and
the determining generates the combination of the attribute values from the determination target data, and determines the positive example or the negative example on the basis of the adjusted importance level of each of the hypotheses that matches each generated combination.

6. An adjustment method that causes a computer to execute a process, the process comprising:
comparing first pattern information in which a condition section, which is one attribute value or a combination of a plurality of attribute values, is associated with a label that corresponds to the condition section with second pattern information that differs from the first pattern information; and
adjusting, in a case where there is a discrepancy in either the condition section or the label, an importance level for the first pattern information on the basis of a degree of conformity or a degree of discrepancy between the first pattern information and the second pattern information.

7. An information processing apparatus comprising:
a comparison unit that compares first pattern information in which a condition section, which is one attribute value or a combination of a plurality of attribute values, is associated with a label that corresponds to the condition section with second pattern information that differs from the first pattern information; and
an adjustment unit that adjusts, in a case where there is a discrepancy in either the condition section or the label, an importance level for the first pattern information on the basis of a degree of conformity or a degree of discrepancy between the first pattern information and the second pattern information.
